# EUROPEAN PATENT APPLICATION

(11) **EP 4 316 260 A1**
(43) Date of publication of application: **07.02.2024**
(21) Application number: 22780965.4
(22) Date of filing: 29.03.2022
(51) Int. Cl.: A23J 3/14, A23L 5/00

(54) **PROTEIN-CONTAINING OIL AND FAT EMULSIFIED COMPOSITION FOR PRODUCING EMULSIFIED FOODS**

(30) Priority: 30.03.2021 JP 2021056899
(71) Applicant: Fuji Oil Holdings Inc., Izumisano-shi, Osaka 598-8540 (JP)
(72) Inventor: KANO, Hiroshi, Izumisano-shi, Osaka 598-8540 (JP); UEYAMA, Tomoki, Izumisano-shi, Osaka 598-8540 (JP); INOUE, Ryota, Izumisano-shi, Osaka 598-8540 (JP)
(74) Representative: Boult Wade Tennant LLP
(86) International application number: PCT/JP2022/015619
(87) International publication number: WO 2022/210754

(57) **Abstract**

A protein-containing oil-and-fat emulsion composition for producing an emulsified food is provided. The composition includes 1 to 70 mass% of a protein, 30 to 99 mass% of an oil and fat, and 0 to 40 mass% of a carbohydrate, based on the total amount of the protein, the oil and fat, and the carbohydrate being 100 mass%. 50 mass% or greater of the protein is derived from a denatured protein material satisfying both a) and b): a) an area ratio of 2000 Da or greater and less than 20000 Da is 45 to 90% in a measurement result of molecular weight distribution; and b) an aqueous solution containing the denatured protein material and having a crude protein concentration of 0.1% remains unturbid when 250 mM guanidinium hydrochloride is added to the aqueous solution, but the aqueous solution becomes turbid when 2M ammonium sulphate is added to the aqueous solution.

## Description

### Technical Field

### Related Application

This application claims the benefit of priority of Japanese Patent Application No. 2021-056899 filed with the Japan Patent Office on March 30, 2021. The priority application is incorporated herein by reference in its entirety.

The present invention relates to a protein-containing oil-and-fat emulsion composition for producing an emulsified food.

### Background Art

At present, an oil-in-water emulsion or a water-in-oil emulsion that contains a lipid and a protein, and a variety of emulsified foods that contain the emulsion are produced.

Sodium caseinate or the like is used for the emulsions and the emulsified foods as a protein having emulsifying capacity. When further emulsifying capacity is required, a synthetic emulsifier such as a glycerin fatty acid ester is used. However, there is consumer's demand to avoid a food that contains such a synthetic emulsifier. In addition, sodium caseinate, which is widely used as a protein having emulsifying capacity, is a milk protein, that is, an animal protein. At present, from the viewpoint of instability of food supply due to population growth, there is attempted reduction of consumption of animal proteins, and switching from animal protein-containing foods to vegetable protein-containing foods.

However, when an amount of the milk protein used is reduced, the emulsifying effect is sometimes not sufficiently achieved. In addition, the vegetable protein such as a soybean protein or a pea protein is usually inferior to the milk protein in terms of high viscosity when dissolved in a solution, solubility, mineral resistance, and heating resistance during retort heating or the like, and is likely to cause a problem such as thickening or occurrence of aggregation, whereby a blending amount of the vegetable protein is limited. Thus, in the current situation, the vegetable protein is not widely used as a substitute for the milk protein.

For this reason, several techniques for improving the vegetable protein material per se have been proposed. For example, Patent Document 1 proposes a technique by which a soybean protein isolate, after adding of a reducing sugar, is heated to promote the Maillard reaction, while allowing an enzymatic digestion. Patent Document 2 proposes a technique by which a protein is treated under heating at 140°C for approximately 30 seconds, then is decomposed with an enzyme, and is then allowed to contain an oil and fat therein. Patent Document 3 discloses an emulsion composition that contains a specific vegetable protein material, an oil and fat, and an optional carbohydrate mixed according to a specific proportion. These disclosures have aimed at modifying the vegetable protein materials to lower the viscosity and to improve the emulsifying capacity, while maintaining the solubility of the protein.

Furthermore, due to the recent health trend, it is required to reduce contents of trans fatty acids and saturated fatty acids in emulsions. As an emulsion composition having a reduced content of a trans fatty acid or a saturated fatty acid, Patent Document 4 discloses a foamable oil-in-water type emulsified oil or fat composition containing specific amounts of an oil and fat, casein protein, a lauric oil and fat, a palm oil mid-melting point part, palm olein, and highly hydrogenated high erucic rapeseed oil, and having a total content of potassium and sodium in a specific range.

### Prior Art Documents

### Patent Documents

Patent Document 1: WO 2009/84529
Patent Document 2: WO 2017/141934
Patent Document 3: WO 2019/189810
Patent Document 4: WO 2019/189727

### Disclosure of the Invention

### Technical Problem

Manufacturers of emulsified foods such as concentrated liquid foods and whiteners blend animal proteins such as sodium caseinate, gelatin, or egg white, and various emulsifiers and/or thickening polysaccharides to stabilize an emulsified state. On the other hand, manufacturers have attempted to incorporate vegetable protein materials because of concerns about supply of animal proteins as raw materials and a desire of consumers to reduce various additives such as emulsifiers and thickening polysaccharides. However, it is difficult to replace all the above-described raw materials with vegetable materials, and only a part of them is replaced. In addition, even if only a part of them is replaced, it is necessary to adjust other raw materials (oils and fats, carbohydrates, emulsifiers, minerals, buffer salts, etc.) to be blended together with the vegetable protein, or production conditions such as a mixing process and a heating process. Raw materials and production conditions vary depending on manufacturers and product groups thereof, and it requires difficult work for each product to determine formulation in consideration of various factors affecting the quality of the emulsified food. In addition, even if an emulsified food having good quality is obtained, the technique for producing the emulsified food is limited to a unique technique for each manufacturer or a specific product thereof, and thus the technique is less likely to be a technique that can be widely used for producing any emulsified food.

Accordingly, the present inventors have aimed at providing an intermediate material that can be widely used for production of various emulsified foods including protein materials, more specifically, providing an intermediate material having good physical properties such as emulsion stability, with which an emulsified food containing a protein material can be produced by assembly of simple formulation without excessive trial and error such as use of casein in combination or use of various emulsifiers and thickening polysaccharides in combination.

### Solution to Problem

The present inventors have found a novel protein-containing oil-and-fat emulsion composition in which an oil and fat, a protein, and a carbohydrate are contained in a specific composition range, and a specific denatured protein material is selected as the protein and blended in combination. Then, the present inventors have found that this is useful as an intermediate material which can be widely used as a raw material for producing various emulsified foods containing a protein material, and have completed the present invention.

That is, the present invention relates to:
(1) a protein-containing oil-and-fat emulsion composition for producing an emulsified food, the protein-containing oil-and-fat emulsion composition including:
   1 to 70 mass% of a protein,
   30 to 99 mass% of an oil and fat, and
   0 to 40 mass% of a carbohydrate,
   based on the total amount of the protein, the oil and fat, and the carbohydrate being 100 mass%,
   wherein
      50 mass% or greater of the protein is derived from a denatured protein material satisfying both a) and b):
      a) in a measurement result of molecular weight distribution, an area ratio of components having a molecular weight of 2000 Da or greater and less than 20000 Da to the total area is 45 to 90%; and
      b) an aqueous solution containing the denatured protein material and having a crude protein concentration of 0.1% remains unturbid when 250 mM guanidinium hydrochloride is added to the aqueous solution, but the aqueous solution becomes turbid when 2M ammonium sulphate is added to the aqueous solution;
(2) the protein-containing oil-and-fat emulsion composition for producing an emulsified food according to (1), wherein the protein-containing oil-and-fat emulsion composition comprises:
   1 to 20 mass% of the protein, and
   80 to 99 mass% of the oil and fat,
   based on the total amount of the protein, the oil and fat, and the carbohydrate being 100 mass%;
(3) the protein-containing oil-and-fat emulsion composition for producing an emulsified food according to (1), wherein the denatured protein material further satisfies that an area ratio of components having a molecular weight of less than 2000 Da to the total area is 45% or less;
(4) the protein-containing oil-and-fat emulsion composition for producing an emulsified food according to (1), wherein the denatured protein material further satisfies that an area ratio of components having a molecular weight of 10000 Da or greater to the total area is less than 50%;
(5) the protein-containing oil-and-fat emulsion composition for producing an emulsified food according to (2), wherein the denatured protein material further satisfies that an area ratio of components having a molecular weight of less than 2000 Da to the total area is 45% or less and an area ratio of components having a molecular weight of 10000 Da or greater to the total area is less than 50%;
(6) the protein-containing oil-and-fat emulsion composition for producing an emulsified food according to (1), wherein the protein-containing oil-and-fat emulsion composition is free of a milk protein;
(7) the protein-containing oil-and-fat emulsion composition for producing an emulsified food according to (1), wherein the protein-containing oil-and-fat emulsion composition is free of an animal protein;
(8) the protein-containing oil-and-fat emulsion composition for producing an emulsified food according to (5), wherein the protein-containing oil-and-fat emulsion composition is free of an animal protein;
(9) the protein-containing oil-and-fat emulsion composition for producing an emulsified food according to (1), wherein an aqueous solution of the denatured protein material has an OD 660 nm of 0.5 or less, the aqueous solution being prepared to have a protein content of 10 mass% and pH 7;
(10) the protein-containing oil-and-fat emulsion composition for producing an emulsified food according to (5), wherein an aqueous solution of the denatured protein material has an OD 660 nm of 0.5 or less, the aqueous solution being prepared to have a protein content of 10 mass% and pH 7;
(11) the protein-containing oil-and-fat emulsion composition for producing an emulsified food according to (8), wherein an aqueous solution of the denatured protein material has an OD 660 nm of 0.5 or less, the aqueous solution being prepared to have a protein content of 10 mass% and pH 7;
(12) an emulsified food including the protein-containing oil-and-fat emulsion composition for producing an emulsified food described in (1);
(13) an emulsified food including the protein-containing oil-and-fat emulsion composition for producing an emulsified food according to (11);
(14) the emulsified food according to (12), wherein the emulsified food contains the protein-containing oil-and-fat emulsion composition for producing an emulsified food in an amount of 0.1 to 99 mass% with respect to the emulsified food; and
(15) the emulsified food according to (13), wherein the emulsified food contains the protein-containing oil-and-fat emulsion composition for producing an emulsified food in an amount of 0.1 to 99 mass% based on the emulsified food.

### Advantageous Effects of Invention

By using the protein-containing oil-and-fat emulsion composition of the present invention, various emulsified foods containing a protein material can be easily produced while maintaining high emulsion stability, even if each manufacturer of the emulsified food does not make various trials and errors of using a caseinate in combination or using an emulsifier or a thickening polysaccharide in combination.

In a more specific embodiment, although depending on the composition of an emulsified food to be produced, an emulsified food having a desired component composition can be easily produced by simply blending the protein-containing oil-and-fat emulsion composition of the present invention and simply adjusting the blending with auxiliary materials such as a flavor or a sweetener, even without blending a protein, an oil and fat, or a carbohydrate as separate raw materials.

### DESCRIPTION OF EMBODIMENTS

A protein-containing oil-and-fat emulsion composition for producing an emulsified food according to one aspect of the present invention includes 1 to 70 mass% of a protein, 30 to 99 mass% of an oil and fat, and 0 to 40 mass% of a carbohydrate, based on the total amount of the protein, the oil and fat, and the carbohydrate being 100 mass%. 50 mass% or greater of the protein is derived from a denatured protein material satisfying both a) and b):
a) in a measurement result of molecular weight distribution, an area ratio for 2000 Da or greater and less than 20000 Da is 45 to 90%; and
b) an aqueous solution containing the denatured protein material and having a crude protein concentration of 0.1% remains unturbid when 250 mM guanidinium hydrochloride is added to the aqueous solution, but the aqueous solution becomes turbid when 2M ammonium sulphate is added to the aqueous solution.

An embodiment of the present invention will be described in detail below.

### Protein-Containing Oil-And-Fat Emulsion Composition

A protein-containing oil-and-fat emulsion composition according to one aspect of the present invention (hereinafter, sometimes referred to as the "present emulsion composition") means an emulsion composition containing a denatured protein material and an oil and fat. The present emulsion composition is used for producing various emulsified foods, and can also be provided to manufacturers of emulsified foods as an intermediate raw material product. The product form can be in a liquid, paste, or solid form as desired by the manufacturers. Preferable examples of the solid form include a powder form and a granular form.

### Component Composition of Present Emulsion Composition

The present emulsion composition has a composition in a specific range, based on the total amount of a protein, an oil and fat, and a carbohydrate being 100 mass%. That is, the composition is made up of 1 to 70 mass% of a protein, 30 to 99 mass% of an oil and fat, and 0 to 40 mass% of a carbohydrate. Note that the carbohydrate need not be an essential component and may be 0 mass%. In the composition, the lower limit of the protein can be 1.2 mass%, 1.5 mass%, 1.7 mass%, 2 mass%, 2.4 mass%, 3 mass%, 3.2 mass%, 3.6 mass%, 4 mass%, 5 mass%, or 10 mass%, and the upper limit thereof can be 65 mass%, 60 mass%, 55 mass%, 50 mass%, 45 mass%, 40 mass%, 35 mass%, 30 mass%, 25 mass%, or 20 mass%. In the composition, the lower limit of the oil and fat can be 35 mass%, 40 mass%, 45 mass%, or 50 mass%, and the upper limit thereof can be 98.8 mass%, 98.3 mass%, 98 mass%, 97.6 mass%, 97 mass%, 96.8 mass%, 96.4 mass%, 95 mass%, 90 mass%, 85 mass%, or 80 mass%. In the composition, the lower limit of the carbohydrate can be 1 mass%, 2 mass%, 5 mass%, or 10 mass%, and the upper limit thereof can be 35 mass%, 30 mass%, 25 mass%, or 20 mass%.

When the protein, the oil and fat, and the carbohydrate are contained in such a composition range as a stable emulsion composition, components necessary for an emulsified food can be blended in the emulsified food in a state in which the components are already stabilized, and amounts of the protein, the oil and fat, and the carbohydrate to be separately blended can be reduced as much as possible. As a result, it is possible to reduce labor and cost for separately preparing and blending raw materials, and it is also possible to reduce a risk of destabilization of an emulsification system due to raw materials to be separately blended into the emulsified food.

### Protein Material

In the present specification, the concept of a "protein material" is a food material which contains a protein as a main component and is used as a raw material for various processed foods and beverages. A protein from which the denatured protein material is derived may be an animal protein or a vegetable protein, or a mixture thereof. Examples of the animal protein include proteins derived from cattle, pig, chicken, egg, and milk. Examples of the vegetable protein include beans such as soybean, pea, mung bean, broad bean, lupin bean, chickpea, kidney bean, lentil bean, and cowpea; seeds such as sesame, canola seed, coconut seed, and almond seed; grains such as maize, buckwheat, barley, and rice; vegetables; and fruits. For example, a protein material derived from soybeans is prepared by further concentrating and processing proteins from soybean materials such as defatted soybeans or whole soybeans, and in general, examples thereof conceptually include soybean protein isolate, concentrated soybean proteins, soybean milk powder, and various processed products thereof.

In an embodiment, 50 mass% or greater of the protein contained in the present emulsion composition is a vegetable protein, more preferably 55 mass% or greater, 60 mass% or greater, 65 mass% or greater, 70 mass% or greater, 75 mass% or greater, 80 mass% or greater, 85 mass% or greater, 90 mass% or greater, 95 mass% or greater, or 97 mass% or greater thereof is a vegetable protein, and most preferably 100 mass% thereof is a vegetable protein, that is, it is preferable that an animal protein such as milk protein be not contained at all. This further enhances the effect of substituting an animal protein with a vegetable protein. In a certain embodiment, it is preferable that at least no milk protein be contained.

It is insufficient that the present emulsion composition contains a protein, an oil and fat, and a carbohydrate in the composition range described above, and only any protein material is selected as the protein, and it is important to select and combine a specific denatured protein material described below in the composition range described above.

### a) Molecular Weight Distribution

The specific denatured protein material used in the present emulsion composition satisfies that an area ratio for 2000 Da or greater and less than 20000 Da is 45 to 90%, for example, 50 to 85%, 55 to 80%, 55 to 75%, or 60 to 70%, in molecular weight distribution when the molecular weight by gel filtration is measured. The protein material described in Patent Document 3 has an area ratio for 20000 Da or greater of greater than 55%, and is different from the specific denatured protein material used in the present emulsion composition in this respect. In an embodiment, an area ratio for 20000 Da or greater is 20% or less, for example, 15% or less, or 10% or less. In an embodiment, an area ratio for less than 2000 Da is 45% or less, for example, 40% or less, 35% or less, 30% or less, or 25% or less. The lower limit is not particularly limited, but may be, for example, 0% or greater, 1% or greater, 2% or greater, 5% or greater, 10% or greater, or 15% or greater. In another embodiment, an area ratio for 10000 Da or greater is less than 50%, for example, 5 to 45%, 10 to 40%, or 15 to 35%. In still another embodiment, an area ratio for 20000 Da or greater is less than 55%, for example, 50% or less, 40% or less, 30% or less, 25% or less, 20% or less, or 15% or less.

The fact that the molecular weight distribution of the denatured protein material is in such a range indicates that a moderately low molecular weight protein is a main component, while amounts of an undegraded protein which is not subjected to any degradation treatment or the like and a highly degraded low molecular weight peptide are small. Note that the measurement of the molecular weight distribution is based on a method described below.

### b) Addition of Guanidine Hydrochloride And Addition of Ammonium Sulfate

An aqueous solution of the specific denatured protein material used in the present emulsion composition remains unturbid even when guanidine hydrochloride is added to the aqueous solution. This is an indicator of sufficiently denatured protein, which is why the protein material used in the present emulsion composition is referred to as a denatured protein material. For example, when guanidine hydrochloride is added to a non-denatured protein such as a soybean protein isolate or sodium caseinate, turbidity occurs. In the present specification, absence of turbidity caused by addition of guanidinium hydrochloride can be confirmed by the fact that turbidity is not visually observed in an aqueous solution containing the denatured protein material and having 250 mM guanidinium hydrochloride and a crude protein concentration of 0.1%, or the fact that an OD 660 nm of the aqueous solution is less than 0.3, for example, 0.2 or less, 0.1 or less, or 0. An aqueous solution of the specific denatured protein material used in the present emulsion composition becomes turbid when ammonium sulfate is added to the aqueous solution. This is an indicator of the protein having a certain degree of polymerization and not being an excessively degraded peptide such as a dipeptide or a tripeptide. In the present specification, turbidity caused by the addition of ammonium sulphate can be confirmed by the fact that turbidity is visually observed in an aqueous solution containing the denatured protein material and having 2 M ammonium sulphate and a crude protein concentration of 0.1%, or the fact that the OD 660 nm of the aqueous solution is 0.3 or more, for example, 0.4 or more, or 0.5 or more. Note that a procedure for adding guanidine hydrochloride and ammonium sulfate is based on a method described below.

The specific denatured protein material used in the present emulsion composition satisfies the above a) to b). Hereinafter, although not particularly limited, features of the denatured protein material will be described in a more specific embodiment.

### c) Purity of Protein

In a more specific embodiment, a protein content in a solid content of the denatured protein material of the present disclosure is preferably 40 mass% or greater, for example, 50 mass% or greater, 60 mass% or greater, 70 mass% or greater, 80 mass% or greater, 85 mass% or greater, or 90 mass% or greater. As a raw material of the denatured protein material included in the above range, a protein isolate is preferable, and for example, in a case of a protein material derived from soybean, a soybean protein isolate or the like is included. The use of a protein material having a high purity of protein within the above range is suitable for efficiently increasing the protein content in the emulsified food. In a case where a material having a low protein content of a soybean milk level is used, it is necessary to blend a larger amount of the material to allow the emulsified food to contain a high level of protein. When the blending amount is large, other problems such as restrictions on blending of other raw materials are likely to occur.

### d) Viscosity

In a more specific embodiment, when a viscosity of the specific denatured protein material solution used in the present emulsion composition is measured under certain conditions, the viscosity is preferably low, and specifically, the viscosity is preferably 50 mPa·s or less, for example, 40 mPa·s or less, 35 mPa·s or less, 30 mPa·s or less, 20 mPa·s or less, 15 mPa·s or less, 10 mPa·s or less, or 5 mPa·s or less. The lower limit of the viscosity is not particularly limited, but may be, for example, 0.1 mPa·s or more, 0.5 mPa·s or more, or 1 mPa·s or more. Note that the viscosity is measured by a method described below.

### e) Solubility

In a more specific embodiment, the specific denatured protein material used in the present emulsion composition has a solubility in water at room temperature of 20 mass% or greater, for example, 25 mass% or greater. The upper limit of the solubility is not particularly limited, but may be, for example, 55 mass% or less, 50 mass% or less, 45 mass% or less, 40 mass% or less, or 35 mass% or less.

### f) Turbidity

In a more specific embodiment, the aqueous solution of the specific denatured protein material used in the present emulsion composition is preferably less turbid and more preferably transparent. More specifically, a 10% aqueous solution (pH 7) of the denatured protein material is prepared, and a value of an OD 660 nm at room temperature after the solution is left to stand overnight is preferably 0.5 or less, for example, 0.3 or less, 0.2 or less, 0.1 or less, or 0.

In a certain embodiment, the specific denatured protein material used in the present emulsion composition satisfies the numerical values defined by e) Solubility and/or f) Turbidity described above, and is thus also referred to as a "water-soluble denatured protein material".

### Denaturation/Molecular Weight Distribution Adjustment Treatment

The specific denatured protein material used in the present emulsion composition can be obtained by combining denaturation of a protein and adjustment of molecular weight distribution. Examples of the treatment for denaturing a protein include a pH adjustment treatment (for example, an acid treatment or an alkali treatment), a denaturant treatment, a heating treatment, a cooling treatment, a high-pressure treatment, an organic solvent treatment, a mineral addition treatment, a supercritical treatment, an ultrasonic treatment, an electrolysis treatment, and a combination thereof. Examples of the treatment for adjusting molecular weight distribution include an enzyme treatment, filtration, gel filtration, chromatography, centrifugation, electrophoresis, dialysis, and a combination thereof. The order and number of the treatment for denaturing a protein and the treatment for adjusting molecular weight distribution are not particularly limited. The treatment for denaturing a protein may be performed before the treatment for adjusting molecular weight distribution, the treatment for adjusting molecular weight distribution may be performed before the treatment for denaturing a protein, or both the treatments may be performed at the same time. In addition, for example, it is also possible to perform the treatment for denaturing a protein between two or more times of the treatment for adjusting molecular weight distribution, to perform the treatment for adjusting molecular weight distribution between two or more times of the treatment for denaturing a protein, or to perform each treatment a plurality of times in an arbitrary order. Note that in a case where desired molecular weight distribution is obtained by the treatment of denaturing a protein, the treatment for adjusting molecular weight distribution need not be performed. When these treatments are combined and carried out a plurality of times, all the treatments may be carried out continuously from raw materials or may be carried out at intervals. For example, a commercially available product that has undergone a certain treatment may be used as a raw material to perform another treatment. In the present specification, such a treatment is referred to as "denaturation/molecular weight distribution adjustment treatment" for convenience. Note that as long as the properties described above are satisfied, the specific denatured protein material may be obtained by mixing a denatured protein material that has undergone the denaturation/molecular weight distribution adjustment treatment with a protein that has not undergone the denaturation/molecular weight distribution adjustment treatment. In this case, a ratio of the two (protein material that has undergone the denaturation/molecular weight distribution adjustment treatment: protein that has not undergone the denaturation/molecular weight distribution adjustment treatment) can be adjusted as appropriate within a range that satisfies the properties described above, but may be, for example, 1 : 99 to 99 : 1, for example, 50 : 50 to 95 : 5, or 75 : 25 to 90 : 10, in terms of mass ratio. In another embodiment, the specific denatured protein material used in the present emulsion composition is only a protein material that has undergone the denaturation/molecular weight distribution adjustment treatment. In an embodiment, the specific denatured protein material used in the present emulsion composition is a vegetable protein material that has undergone the denaturation/molecular weight distribution adjustment treatment, preferably a vegetable protein material derived from beans, more preferably a vegetable protein material derived from soybean, pea, mung bean, or broad bean.

The conditions of the treatment for denaturing a protein, such as concentrations of an acid, an alkali, an organic solvent, a mineral, and the like, a temperature, a pressure, an output intensity, an electric current, and time can be appropriately set by those skilled in the art. In a case of a pH adjusting treatment, the treatment may be performed in a pH range having an upper limit and a lower limit of any value of pH 2, 2.5, 3, 3.5, 4, 4.5, 5, 5.5, 6, 6.5, 7, 7.5, 8, 8.5, 9, 9.5, 10, 10.5, 11, 11.5, and 12, for example, in a range of pH 2 to 12. In a case of the acid treatment, a method of adding an acid or a method of performing a fermentation treatment such as lactic acid fermentation may be used. Examples of the acid to be added include: inorganic acids such as hydrochloric acid and phosphoric acid; and organic acids such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or drink containing an acid such as fruit juice such as a lemon, concentrated fruit juice, fermented milk, yoghurt, or brewed vinegar. In a case of the alkali treatment, an alkali such as sodium hydroxide or potassium hydroxide may be added. In a case of the denaturant treatment, a denaturant such as guanidine hydrochloride, urea, arginine, or PEG may be added. In a case of the heating or cooling treatment, examples of the heating temperature include a range having an upper limit and a lower limit of any temperature of 60°C, 70°C, 80°C, 90°C, 100°C, 110°C, 120°C, 125°C, 130°C, 135°C, 140°C, 145°C, and 150°C, for example, 60°C to 150°C. Examples of the cooling temperature include a range having an upper limit and a lower limit of any temperature of -10°C, -15°C, -20°C, -25°C, -30°C, -35°C, -40°C, -45°C, -50°C, -55°C, -60°C, -65°C, -70°C, and - 75°C, for example, -10°C to -75°C. Examples of the heating or cooling time include a range having an upper limit and a lower limit of any time of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes, for example, 5 seconds to 200 minutes. In a case of the high-pressure treatment, examples of the condition of the pressure include a range having an upper limit and a lower limit of any pressure of 100 MPa, 200 MPa, 300 MPa, 400 MPa, 500 MPa, 600 MPa, 700 MPa, 800 MPa, 900 MPa, and 1000 MPa, for example, 100 MPa to 1000 MPa. In a case of the organic solvent treatment, examples of the solvent to be used include alcohols and ketones, for example, ethanol or acetone. In a case of the mineral addition treatment, examples of the mineral to be used include divalent metal ions such as calcium and magnesium. In a case of the supercritical treatment, for example, carbon dioxide in a supercritical state at a temperature of about 30°C or higher and a pressure of about 7 MPa or more can be used for treatment. In a case of the ultrasonic treatment, for example, the treatment may be performed by irradiation with an output of 100 to 1000 W at a frequency of 100 KHz to 2 MHz. In a case of the electrolysis treatment, for example, the aqueous protein solution may be treated by applying a voltage of 100 mV to 1000 mV. In a specific embodiment, the treatment to denature a protein is selected from the denaturant treatment, the heating treatment, and combinations thereof.

The conditions of the treatment for adjusting molecular weight distribution, such as an enzyme, a type of filter medium, the number of revolutions, an electric current, and time, can be appropriately set by those skilled in the art. Examples of the enzyme to be used include proteases classified into "metal protease", "acidic protease", "thiol protease", and "serine protease". The reaction can be carried out at a reaction temperature of 20 to 80°C, preferably 40 to 60°C. Examples of the filter medium include filter paper, filter cloth, diatomaceous earth, ceramic, glass, and membrane. Examples of a carrier for gel filtration include dextran and agarose. Examples of the conditions for centrifugation include 1000 to 3000 G, and 5 to 20 minutes.

### Oil And Fat

The oil and fat contained in the present emulsion composition is not particularly limited, and a vegetable or animal oil and fat may be used. Examples of the vegetable oil and fat include vegetable oils and fats such as a soybean oil, a rapeseed oil, a corn oil, a cottonseed oil, a peanut oil, a sunflower oil, a rice oil, a safflower oil, an olive oil, a sesame oil, a palm oil, a palm kernel oil, and a coconut oil; animal oils and fats such as a beef fat, a milk fat, a fish oil, and a lard; processed oils and fats obtained by fractionation, hydrogenation, or trans-esterification of these oils and fats; and mixed oils and fats thereof. In general, when an oil-in-water type emulsion is prepared, it is preferable to use a liquid to semi-solid oil and fat having a low melting point, and when a powdery emulsion composition is prepared, it is preferable to use a solid to extremely hardened oil and fat. In an embodiment, the present emulsion composition is free of milk fat. In an embodiment, the present emulsion composition is free of animal oil and fat.

The content of an oil and fat is determined by the content of the oil and fat in the present emulsion composition. In a case where the denatured protein material contains an oil and fat, the content of an oil and fat including the amount of the oil and fat in the protein material is calculated. Note that the oil and fat content is measured by an acid decomposition method.

The oil and fat included in the present emulsion composition preferably has little low trans fatty acid or no trans fatty acid. More specifically, the trans fatty acid content in all constituent fatty acids of the oil or fat is preferably less than 5 mass%, more preferably less than 3 mass%, and examples thereof include 0 to 4.5 mass%, 0.5 to 3 mass%, and 1 to 2.5 mass%.

### Carbohydrate

Specific examples of the carbohydrate contained in the present emulsion composition include saccharides including starch and dietary fiber. Specific examples of the carbohydrate include fructose, glucose, sugar, maltose, lactose, trehalose, starch syrup, coupling sugar, honey, isomerized sugar, invert sugar, oligosaccharide (isomaltooligosaccharide, reduced xylooligosaccharide, reduced gentiooligosaccharide, xylooligosaccharide, gentiooligosaccharide, nigerooligosaccharide, theandeoligosaccharide, soybean oligosaccharide, etc.), sugar-alcohols (maltitol, erythritol, sorbitol, palatinite, xylitol, lactitol, reduced starch syrup, etc.), dextrin, and starches (raw starch, modified starch, etc.). Examples of the dietary fiber include polydextrose, indigestible dextrin, crystalline cellulose, and thickening polysaccharides.

### Other Raw Materials

Although not essential to the present emulsion composition, various other raw materials can be contained as necessary in accordance with embodiments of the present emulsion composition or embodiments of the emulsified food as a final product.

### Emulsifier

The present emulsion composition may or need not contain an emulsifier. Examples of the emulsifier include glycerin fatty acid ester, polyglycerin fatty acid ester, sucrose fatty acid ester, propylene glycol fatty acid ester, sorbitan fatty acid ester, organic acid monoglyceride, polysorbate, and lecithin. One type of these emulsifiers may be used alone or two or more types of these emulsifiers may be used in combination.

A blending amount of the emulsifier in the present emulsion composition can be appropriately adjusted depending on embodiments of the present emulsion composition and embodiments of the emulsified food as a final product. Examples of the blending amount include 0.3 to 2.5 mass%.

### Polyvalent Metal Ion

The present emulsion composition may or need not contain a polyvalent metal ion. In addition to calcium and magnesium as typical polyvalent metal ions, examples of the other polyvalent metal ions include iron, zinc, copper, selenium, chromium, cobalt, manganese, and molybdenum, each of which can be incorporated in the form of a salt such as a chloride or a sulfide, but is preferably in the form of a salt having high solubility such as calcium chloride. As one embodiment, the present invention can provide the present emulsion composition having high mineral resistance, and in such an embodiment, it is characterized in that even if the present emulsion composition contains a polyvalent metal ion, aggregation is hardly caused by heating treatment in the production process of the present emulsion composition or the production process of an emulsified food. Accordingly, it is useful for producing an emulsified food such as a concentrated liquid food which requires blending of a polyvalent metal ion. In such an embodiment, the emulsifier is preferably contained in the present emulsion composition.

### Salt

The present emulsion composition may or need not contain a salt. Examples of the salt include: organic acid salts such as sodium citrate; phosphates such as secondary sodium phosphate, secondary potassium phosphate, and sodium polyphosphate; and sodium bicarbonate. More specifically, in a case where the salt is used, it is contained in the present emulsion composition in an amount of 0.05 to 3.0 mass%, preferably 0.1 to 1.0 mass%.

### Other Additives

For the purpose of adjusting flavor, color, sweetness, and viscosity, a flavor, a coloring agent, a thickening polysaccharide, and the like may or need not be added to the present emulsion composition as needed.

### Precipitation Rate of Emulsion Composition

In a more specific embodiment, a precipitation rate of the present emulsion composition is 10% or less, for example, 8% or less, 6% or less, 5% or less, 4% or less, or 3% or less. For example, the present emulsion composition shows the above precipitation rate immediately after production and after storage at 4°C for 1 week, 2 weeks, 1 month, 2 months, 3 months, 4 months, 5 months, or 6 months. Note that measurement of the precipitation rate is based on a method described below.

### Median Diameter of Emulsion Composition

In a more specific embodiment, a median diameter of the present emulsion composition is 4 µm or less, for example, 3 µm or less, 2 µm or less, or 1 µm or less. For example, the present emulsion composition shows the above median diameter immediately after production and after storage at 4°C for 1 week, 2 weeks, 1 month, 2 months, 3 months, 4 months, 5 months, or 6 months. Note that measurement of the median diameter is based on a method described below.

### Production Mode of Present Emulsion Composition

Hereinafter, a production mode of the present emulsion composition will be described, but the production is not limited to the mode. Raw materials such as the specific denatured protein material, oil and fat, carbohydrate, water, and other materials such as an emulsifier or a mineral as needed, which are described above, are mixed and the mixed solution is homogenized with a high-pressure homogenizer or the like to produce the present emulsion composition. A specific method for preparing the emulsion may be a known method, but a specific example thereof will be described below.

### Denatured Protein Material

The present emulsion composition can be prepared by using the specific denatured protein material. Typically, the present emulsion composition can be prepared using a denatured protein material subjected to the denaturation/molecular weight distribution adjustment treatment as a raw material. Alternatively, the specific denatured protein material can be easily obtained by purchasing it from a manufacturer of protein materials, for example, Fuji Oil Co., Ltd., or asking the manufacturer to produce it. Note that known commercially available soybean protein materials such as "Fujipro E", "Fujipro CL", "Fujipro AL", "New Fujipro 4500", "Proleena RD-1", "Proleena 900", and "Proleena HD101R" do not correspond to the protein material satisfying both the properties a) and b) described above. The denatured protein material may be added to an aqueous phase portion, an oil phase portion, or both the aqueous phase portion and the oil phase portion in preparing an oil-and-fat emulsion composition. Alternatively, in an embodiment, the present emulsion composition can also be prepared by subjecting a protein raw material to the denaturation/molecular weight distribution adjustment treatment, for example, during preparation of the aqueous phase portion described below. Even in such an embodiment, the present emulsion composition can be regarded as an emulsion composition containing a denatured protein material satisfying the features described above.

### Mixing and Homogenization

The aqueous phase portion can be prepared by producing an aqueous solution of the specific denatured protein material. Other raw materials may or need not be added to the aqueous solution as needed. The concentration of the denatured protein material in the aqueous solution is not particularly limited, and examples thereof include 1 to 40%, 2 to 35%, 3 to 30%, 4 to 20%, 5 to 15%, and 6 to 10%. The aqueous phase portion may be prepared without using the specific denatured protein material. The pH of the aqueous phase portion is not particularly limited and need not be adjusted, or may be adjusted by adding an acid or an alkali. Examples of the pH of the aqueous phase portion include 3 to 10, 4 to 6.5, and 7 to 9. The preparation temperature of the aqueous phase portion is not particularly limited and may be, for example, room temperature. In a more specific embodiment, in a case where the aqueous phase portion contains a hydrophilic emulsifier or carbohydrate whose solubility is improved by heating, the aqueous phase portion can be prepared by dissolution or dispersion in a temperature range of for example, 20 to 70°C, preferably 55 to 65°C. The raw materials to be added to the aqueous phase portion can be appropriately determined by those skilled in the art. For example, in a case where salts or water-soluble flavors are added, they are added to the aqueous phase portion.

The oil phase portion may be prepared using only an oil and fat, or may be prepared by mixing an oil-soluble material with an oil and fat and dissolving or dispersing the oil-soluble material in a temperature range of, for example, 50 to 80°C, preferably 55 to 70°C. Furthermore, the specific denatured protein material may be dispersed in the oil phase portion. The raw materials to be added to the oil phase portion can be appropriately determined by those skilled in the art. For example, in a case of using a lipophilic emulsifier, a lipophilic flavor, or the like, it may be added to a part or all of the raw material oil and fat.

The resultant oil phase portion and the resultant aqueous phase portion are warmed to, for example, 40 to 80°C, preferably 55 to 70°C, mixed, and subject to preliminary emulsification. The preliminary emulsification can be carried out using a rotary stirrer such as a homomixer. After the preliminary emulsification, the mixture is homogenized by a homogenizing apparatus such as a homogenizer. A pressure during homogenization by the homogenizer can be 10 to 100 MPa, preferably 30 to 100 MPa. Alternatively, all the raw materials may be mixed and homogenized in a homogenizing apparatus without preliminary emulsification. In a more specific embodiment, preliminary emulsification and/or homogenization may be performed a plurality of times. In a still more specific embodiment, all or a part of the aqueous phase and a part of the oil phase may be mixed and subjected to preliminary emulsification, and the remaining raw materials may be added thereto and homogenized; a part of the aqueous phase and all or a part of the oil phase may be mixed and subjected to preliminary emulsification, and the remaining raw materials may be added thereto and homogenized; or these processes may be repeated.

Examples of the homogenizing apparatus include: a homomixer; a high-pressure homogenizer; a colloid mill; an ultrasonic emulsification device; an agihomomixer having both functions of an agitator and a homomixer; a cutter blade mixer such as a silent cutter or a Stephan cooker; and a rotor stator type in-line mixer such as an extruder or an emulder. For example, in a case of homogenization by the high-pressure homogenizer, the pressure can be 10 to 100 MPa, preferably 30 to 100 MPa.

### Heat Sterilization

The resultant emulsion composition may or need not be subjected to a heat sterilization treatment, as needed. In a case of performing the heat sterilization treatment, for example, the treatment is performed using a UHT sterilization treatment method by an indirect heating method or a direct heating method, and as needed, homogenization is performed again with a homogenizer, and cooling is performed to 2 to 15°C or the like. In an embodiment, the present emulsion composition is heat resistant and can be subjected to retort sterilization. A temperature of the heat sterilization is not particularly limited, and examples thereof include 110 to 150°C and 120 to 140°C. A time of the heat sterilization is not particularly limited, and examples thereof include 1 second to 60 minutes, 3 seconds to 40 minutes, and 5 seconds to 30 minutes, for example, 2 to 7 seconds, 1 to 25 minutes, and 5 to 20 minutes.

### Productization

The emulsion composition produced as described above may be prepared in advance during production of an emulsified food by the manufacturer of the emulsified food, but can be processed in a liquid state as it is into a paste or a powdery state and hermetically packaged, made into a product as an intermediate raw material for producing an emulsified food, and provided to the manufacturer of the emulsified food.

### Features of Present Emulsion Composition

In an embodiment, the present emulsion composition has a small emulsion particle diameter when prepared, such as a median diameter of 4 µm or less, for example, 3 µm or less, 2 µm or less, 1 µm or less, or 0.9 µm or less. In a further embodiment, the present emulsion composition can be prepared to have the emulsion particle diameter described above even without adding lecithin, a synthetic emulsifier, or the like. In a still further embodiment, the present emulsion composition is resistant to emulsion breakdown even when subjected to heating treatment, and thus has low viscosity and high emulsion stability.

Furthermore, in an embodiment, the present emulsion composition has high mineral resistance and does not substantially lose the features of low viscosity and high emulsion stability even when divalent metal ions such as calcium are contained. Preferred examples of the viscosity include 50 mPa·s or less, 40 mPa·s or less, 35 mPa·s or less, 30 mPa·s or less, 20 mPa·s or less, and 15 mPa·s or less. The lower limit of the viscosity is not particularly limited but may be, for example, 0.5 mPa·s or more, 1 mPa·s or more, or the like.

### Emulsified Food

In one embodiment, the emulsified food formed by blending the present emulsion composition is a food, the entirety of which takes an emulsified form such as an oil-in-water type, a water-in-oil type, a water-in-oil-in-water type, or an oil-in-water-in-oil type. A more preferable embodiment is an emulsified food in which a caseinate is normally blended, and more specific examples thereof include liquid food, whitener, creaming powder, ice cream, ice milk, lact-ice, whipped cream, flour paste, margarine, infant milk powder, oil-and-fat containing powder emulsified beverage, oil-and-fat containing liquid emulsified beverage, cheese-like food, mayonnaise-like food, and emulsified oil and fat. In an embodiment, a preferable emulsified food of the present invention is an emulsified food of the type described above, in which the caseinate/protein (mass ratio) in the protein material contained in the present emulsion composition is, for example, 1 or less, 0.5 or less, 0.25 or less, 0.1 or less, 0.05 or less, or 0.01 or less. In a most preferable embodiment, the emulsified food of the present invention is free of caseinate. The emulsified food can be produced by blending the present emulsion composition at the time of mixing raw materials and using a common method for each kind of emulsified food. Accordingly, the present invention relates, in an aspect, to a method for producing an emulsified food of the type described above, the method including adding the present emulsion composition, and in an embodiment, also to a method for producing an emulsified food product of the type described above, the method including replacing caseinate with the present emulsion composition.

The amount of the present emulsion composition to be added to the emulsified food is not particularly limited, and can be appropriately set by those skilled in the art depending on the type of the emulsified food. In addition, for an emulsified food of a type in which a caseinate is normally blended, the amount of the present emulsion composition to be added can be determined depending on the amount of the caseinate used. More specific examples thereof include 0.1 to 99 mass%, 0.5 to 95 mass%, 1 to 90 mass%, 2 to 80 mass%, 2.5 to 50 mass%, 3 to 30 mass%, 3.5 to 20 mass%, 4 to 15 mass%, 5 to 10 mass %, and 0.5 to 5 mass%, with respect to the emulsified food. In an embodiment, the present emulsion composition may be used as an emulsified food as it is.

In an embodiment, preferred examples of the viscosity of the emulsified food include 50 mPa·s or less, 40 mPa·s or less, 35 mPa·s or less, 30 mPa·s or less, 20 mPa·s or less, and 15 mPa·s or less. The lower limit of the viscosity is not particularly limited, and examples thereof include 0.5 mPa·s or more, and 1 mPa·s or more. In an embodiment, preferred examples of the average particle diameter at the time of preparation of the emulsified food include 5 µm or less, 3 µm or less, 2 µm or less, 1 µm or less, and 0.9 µm or less.

In another embodiment, the emulsified food is a creamy or mayonnaise-like emulsified food. For example, the mayonnaise-like emulsified food can be prepared with 73% or greater of an oil content, 1.8% or greater of a protein, and 24% or less of a water content in an emulsion composition; 74% or greater of an oil content, 1.9% or greater of a protein, and 22% or less of a water content; more specifically, 75% or greater of an oil content, 2% or greater of a protein, and 20% or less of a water content; and still more specifically, 75 to 80% of an oil content, 2 to 4% of a protein, and 16 to 23% of a water content.

In used herein, the term "liquid food" refers to a liquid nutritional composition in a form of soup, potage, milk drink, fruit juice, or the like without chunk. In one embodiment of a liquid food according to one aspect of the present invention, the liquid food has a caloric value of 0.5 kcal/mL or more and contains at least a protein, a lipid, a carbohydrate, a mineral, and a vitamin as nutritional components. Preferably, it has an energy composition of 10 to 25% of a protein, 15 to 45% of a lipid, and 35% or greater of a carbohydrate and a composition of 20 to 110 mg/100 kcal of calcium and 10 to 70 mg/100 kcal of magnesium. More preferably, it has an energy composition of 16 to 20% of a protein, 20 to 30% of a lipid, and 50 to 65% of a carbohydrate, and a composition of 35 to 65 mg/100 kcal of calcium and 15 to 40 mg/100 kcal of magnesium. In addition, it is preferable that a liquid food contain the denatured protein material contained in the present emulsion composition in an amount of 50 mass% or greater, preferably 60 mass% or greater as a protein relative to the total protein. The upper limit is not particularly limited, for example, a liquid food contains the denatured protein material contained in the present emulsion composition in an amount of 100 mass% or less, 95 mass% or less, or 90 mass% or less, as a protein relative to the total protein. Furthermore, it is preferable to have low osmotic pressure to minimize side effects such as diarrhea, fluidity to pass through even a thin tube, good flavor, emulsion stability for storage at room temperature for several months, and the like.

In use herein, the term "whitener" refers to an oil-in-water emulsion containing a protein and a lipid as components. The whitener is also referred to as coffee whitener or creamer and is used to impart a mild feeling mainly to foods having bitterness such as coffee. The whitener is used not only for beverages such as coffee and black tea but also for top-coating of coffee jelly, pudding, fruit jelly, and the like. In one embodiment, the whitener of one aspect of the present invention is produced by using the present emulsion composition as it is. In another embodiment, the whitener contains, in addition to the present emulsion composition, an oil and fat, and as needed, raw materials such as an emulsifier and a phosphate. In addition, the whitener preferably contains the denatured protein material contained in the present emulsion composition in an amount of 50 mass% or greater, preferably 60 mass% or greater as a protein relative to the total protein. Although the upper limit is not particularly limited, for example, a whitener contains the denatured protein material contained in the present emulsion composition in an amount of 100 mass% or less, 95 mass% or less, or 90 mass% or less as a protein relative to the total protein. The whitener can be produced using a method described in, for example, WO 2010/073575 and JP 2016-189719 A.

### Measurement Method

In the present specification, components and physical properties related to the present emulsion composition and the raw materials thereof are measured in accordance with the following methods.

### Protein Content

A protein content is measured by a Kjeldahl method. Specifically, a mass of nitrogen measured by the Kjeldahl method relative to a mass of a protein material dried at 105°C for 12 hours is represented by "mass%" as a protein content in the dried product. Note that the nitrogen conversion coefficient is 6.25. Basically, the protein content is calculated by rounding off to one decimal place.

### Oil And Fat (lipid) Content

An oil and fat content is measured by an acid decomposition method. Basically, the oil and fat content is calculated by rounding off to one decimal place.

### Carbohydrate

A carbohydrate content is a value calculated by subtracting contents of water, protein, lipid, and ash (by a direct ashing method) from a sample.

### Molecular Weight Distribution

A sample solution is prepared by adding an eluent to a protein material to adjust a concentration of the protein material to 0.1 mass%, and then filtering the solution with a 0.2 µm filter. A gel filtration system is assembled by connecting two kinds of columns in series, a known protein or the like (Table 1) serving as a molecular weight marker is first charged, and a calibration curve is determined from the relationship between the molecular weight and the retention time. Next, the sample solution is charged, and the content ratio % of each molecular weight fraction is determined by the ratio of the area of a specific molecular-weight range (time range) to the area of the total absorbance chart (1st column: "TSK gel G3000SW_{XL}" (Sigma-Aldrich), 2nd column: "TSK gel G2000SW_{XL}" (Sigma-Aldrich), eluent: 1% SDS + 1.17% NaCl + 50 mM phosphate buffer (pH 7.0), 23°C, flow rate: 0.4 mL/min, detection: UV 220 nm). Basically, the content ratio % is calculated by rounding off to one decimal place.

**[Table 1]**

| Molecular weight marker | |
|---|---|
| Marker | Molecular weight |
| Thyroglobulin | 335,000 |
| γ-globulin | 150,000 |
| Albumin | 67,000 |
| Peroxidase | 43,000 |
| Myoglobin | 18,000 |
| Cytochrome C | 12,384 |
| Insulin | 5,734 |
| Glutathione | 307 |
| p-amino acid benzoic acid | 137 |

### Addition of Guanidine Hydrochloride

An aqueous solution of a protein material having a crude protein concentration of 0.2% is prepared. If the aqueous solution becomes turbid during preparation, about 1 to 10% of the aqueous solution is centrifuged after the preparation, and the supernatant is recovered and diluted to have a crude protein concentration of 0.2% to produce a sample solution. An equal amount of guanidine hydrochloride is added thereto to prepare a solution having a crude protein concentration of 0.1% and a guanidine hydrochloride concentration of 250 mM, which is then allowed to stand overnight in a refrigerator. The presence or absence of turbidity is visually confirmed. At the same time, a 10 mm glass cell is used to measure a degree of turbidity at a wavelength of 660 nm.

### Addition of Ammonium Sulfate

An aqueous solution of a protein material having a crude protein concentration of 0.2% is prepared. If the aqueous solution becomes turbid during preparation, about 1 to 10% of the aqueous solution is centrifuged after the preparation, and the supernatant is recovered and diluted to have a crude protein concentration of 0.2% to produce a sample solution. An equal amount of ammonium sulphate is added thereto to prepare a solution having a crude protein concentration of 0.1% and an ammonium sulphate concentration of 2M, which is then allowed to stand overnight in a refrigerator. The presence or absence of turbidity is visually confirmed. At the same time, a 10 mm glass cell is used to measure a degree of turbidity at a wavelength of 660 nm.

### Viscosity

The viscosity of a protein material is determined by preparing an aqueous solution of the protein material to have a protein content of 10 mass%, using a B-type viscosimeter (preferably available from Brookfield) with a rotor "#LV-1" at 60°C, and reading a measured value after 1 minute at 100 rpm. If measurement is impossible with "#LV-1 ", the rotor is sequentially replaced with "#LV-2", "#LV-3", "#LV-4", and "#LV-5". If measurement is impossible due to a low viscosity with "#LV-1 " at 100 rpm, the viscosity is defined as "lower limit", and if measurement is impossible due to a high viscosity with "#LV-5" at 100 rpm, the viscosity is defined as "upper limit". The viscosity of the emulsion composition is measured in the same manner as described above except that a sample is directly measured at 20°C using a B-type viscometer.

### Median Diameter

The median diameter is measured by a laser diffraction particle size distribution measuring apparatus (preferably, available from Shimadzu Corporation). The median diameter is determined basically by rounding off a numerical value of the one decimal place. Alternatively, if the value is small, two significant digits remains after rounding off the next digit.

### Examples

The embodiments of the present invention will be more specifically described with reference to Examples below. In the examples, "% " and "part(s)" mean "mass% " and "part(s) by mass" unless otherwise specified.

### Example 1: Preparation of Denatured Protein Material

The following vegetable protein materials and denatured protein materials were obtained and prepared.

Sample A: a product of soybean protein isolate subjected to denaturation/molecular weight distribution adjustment (test product of Fuji Oil Co., Ltd., raw material soybean protein isolate: Fujipro RN, commercially available product from Fuji Oil Co., Ltd.)

Sample B: a product of pea protein isolate subjected to denaturation/molecular weight distribution adjustment (test product of Fuji Oil Co., Ltd., raw material pea protein isolate: Empro86HV, commercially available product from Emsland)

Sample C: a product of mung bean protein isolate subjected to denaturation/molecular weight distribution adjustment (both sample and raw material were test products of Fuji Oil Co., Ltd.)

Sample D: a product of broad bean protein isolate subjected to denaturation/molecular weight distribution adjustment (test product of Fuji Oil Co., Ltd., raw material broad bean protein isolate: commercially available product from Australian Plant Proteins)

Sample E: soybean protein isolate (Fujipro RN, commercially available product from Fuji Oil Co., Ltd.)

Sample F: enzyme-treated soybean protein isolate (test product of Fuji Oil Co., Ltd.)

Sample G: soybean peptide (Highnut AM, commercially available product from Fuji Oil Co., Ltd.)

Sample H: Sample A of Patent Document 3 (test product of Fuji Oil Co., Ltd.)

The molecular weight distributions and the results of addition of guanidine hydrochloride and ammonium sulfate of Samples A to H described above are shown in Table 2.

**[Table 2]**

| | 20000 Da or greater | 2000 Da or greater and less than 20000 Da | Less than 2000 Da | 10000 Da or greater | Addition of 250 mM of guanidine hydrochloride | Addition of 2 M of ammonium sulphate |
|---|---|---|---|---|---|---|
| Sample A | 14 | 64 | 22 | 27 | Transparent | Turbid |
| Sample B | 12 | 68 | 20 | 25 | Transparent | Turbid |
| Sample C | 5 | 60 | 36 | 20 | Transparent | Turbid |
| Sample D | 12 | 63 | 25 | 26 | Transparent | Turbid |
| Sample E | 81 | 13 | 7 | 85 | Turbid | Turbid |
| Sample F | 40 | 48 | 13 | 51 | Turbid | Turbid |
| Sample G | 0 | 20 | 80 | 0 | Transparent | Transparent |
| Sample H | 55 | 38 | 7 | 67 | Turbid | Turbid |

Sample A was dissolved in distilled water and pH-adjusted with NaOH to prepare a 10 mass% solution of pH 7. The solution was allowed to stand overnight, and the OD 660 nm of the solution when measured at room temperature, was 0.13. The viscosity of the solution at 60°C was 3.1 mPa·s.

### Example 2: Preparation of Protein-Containing Oil-And-Fat Emulsion Composition

Protein-containing oil-and-fat emulsion compositions were prepared using Samples A to D described above. MCT 64 (medium-chain fatty acid oil and fat, available from Fuji Oil Co., Ltd.) as an oil component and the protein material of each of Samples A to D described above were mixed to produce mixtures having 20% of the oil content and 1%, 0.5%, 0.1%, and 0.05% of the protein content, respectively, and the mixtures were subjected to ultrasonic treatment to prepare emulsions. The median diameter of each of the prepared emulsions was measured using a laser diffraction particle size distribution measuring device (Shimadzu Corporation). The results are shown in Table 3.

**[Table 3]**

| | Day 1 | | | | Day 7 | | | |
|---|---|---|---|---|---|---|---|---|
| | Protein content | | | | Protein content | | | |
| | 1% | 0.5% | 0.1% | 0.05% | 1% | 0.5% | 0.1% | 0.05% |
| Sample A | 1.3 | 1.6 | 8.4 | 19.6 | 1.9 | 2.3 | 5.3 | 15.6 |
| Sample B | 1.9 | 2.6 | 25.0 | 57.9 | 2.0 | 2.7 | 12.8 | 19.3 |
| Sample C | 1.3 | 1.9 | 11.9 | 27.0 | 2.0 | 2.0 | 8.1 | 21.6 |
| Sample D | 1.3 | 1.5 | 10.9 | 18.1 | 1.7 | 2.4 | 2.9 | 3.5 |

In all samples, good emulsified particles were maintained at the protein content of 0.5% or greater.

### Example 3: Storage test of protein-containing oil-and-fat emulsion composition (coffee whitener)

In an aqueous phase portion, 6.1 g of Sample A or 5.4 g of Sodium Caseinate 180 (sodium caseinate, available from Fonterra) as a denatured protein material, and 20 g of MCT 64 or a low-melting-point fraction of palm kernel oil (Fuji Oil Co., Ltd.) as an oil and fat were used. After adjusting pH to 7.0 with sodium hydroxide and adjusting the total amount to 100 g with distilled water, each of the resultant mixtures was subjected to homogenization with a homogenizer (10 MPa) to prepare a protein-containing oil-and-fat emulsion composition.

Each of the resultant various emulsion compositions was stored at 4°C, and after 1 week, 2 weeks, 1 month, 2 months, 4 months, and 6 months, the viscosity was measured and the state was visually observed. The evaluation results are summarized in Table 4.

**[Table 4]**

| | Storage period | Viscosity (MPa-s) | Visual observation |
|---|---|---|---|
| Sample A | Immediately after | 9.49 | Good |
| | 1 week | - | Good |
| | 2 weeks | 9.39 | Good |
| MCT 64 | 1 month | 3.63 | Good |
| | 2 months | 3.95 | Good |
| | 4 months | 3.95 | Good |
| | 6 months | 4.48 | Good |
| Sample A | Immediately after | 10.03 | Good |
| | 1 week | - | Good |
| | 2 weeks | 9.17 | Good |
| Low-melting-point fraction of palm kernel oil | 1 month | 3.41 | Good |
| | 2 months | 3.52 | Good |
| | 4 months | 3.41 | Good |
| | 6 months | 3.84 | Good |
| Sodium caseinate | Immediately after | 18.88 | Good |
| | 1 week | - | Separated |
| | 2 weeks | 20.27 | Separated |
| MCT 64 | 1 month | 12.59 | Separated |
| | 2 months | 11.73 | Separated |
| | 4 months | 11.31 | Separated |
| | 6 months | 11.2 | Separated |
| Sodium caseinate | Immediately after | 13.97 | Good |
| | 1 week | - | Separated |
| Low-melting-point fraction of palm kernel oil | 2 weeks | 17.71 | Separated |
| | 1 month | 10.45 | Separated |
| | 2 months | 9.81 | Separated |
| | 4 months | 10.5 | Separated |
| | 6 months | 9.39 | Separated |

The protein-containing oil-and-fat emulsion composition in which sodium caseinate was used was found to be separated by low-temperature storage, while the protein-containing oil-and-fat emulsion composition in which Sample A was used was found to be not separated over time, and good results were obtained. When the composition in which Sample A was used was added to coffee, neither aggregation nor feathering was found, which was a good result. According to the present invention, an emulsifier-free coffee whitener was obtained.

### Example 4: Study on Liquid Food

Sample A and Sample H were used to prepare liquid foods in accordance with the formulations shown in Table 5. After water, the protein, and the oil and fat were mixed and dissolved, the minerals, the acid, the sugar, and the emulsifier were mixed therewith, and the pH was adjusted to 7.6 with KOH solution and NaOH solution. This was subjected to a high-pressure homogenizer at a pressure of 50 MPa and then heated at 123°C for 10 minutes to produce a liquid food. The resultant liquid food was stored at 40°C for 8 weeks, and the particle diameter and viscosity were measured. In addition, the presence or absence of precipitation was visually observed in a stationary state. The results are shown in Table 6.

**[Table 5]**

| | Liquid food 1 | Liquid food 2 |
|---|---|---|
| Sample A | 6.43% | |
| Sample H | | 6.63% |
| MCT 64 | 2.76% | 2.76% |
| Refined soybean oil*¹ | 4.14% | 4.14% |
| Citric acid | 1.16% | 0.96% |
| Trisodium citrate | | 0.05% |
| K₂HPO₄ (anhydrous) | 0.2% | 0.15% |
| MgO | 0.08% | 0.07% |
| Ca(OH)₂ | 0.2% | 0.17% |
| CaCO₃ | | 0.04% |
| 20% KOH | 0.62% | 0.7% |
| 28% NaOH | 1.52% | 1% |
| Emulsifier*² | 1% | 1% |
| Maltodextrin*³ | 15.9% | 15.9% |
| Water | 65.99% | 66.43% |
| Total amount | 100% | 100% |

| | | |
|---|---|---|
| *1: Refined soybean oil (Fuji Oil Co., Ltd.) *2: SLP-White Lyso (Tsuji Oil Mills Co., Ltd.) and Sunsoft No. 681SPV (Taiyo Kagaku Co., Ltd.) were used in equivalent amounts *3: TK-16 (Matsutani Chemical Industries Co., Ltd.) | | |

**[Table 6]**

| | Storage period (days) | Median diameter (µm) | Viscosity (MPa·s) | Precipitation |
|---|---|---|---|---|
| Liquid food 1 | 1 | 0.65 | 14.5 | None |
| | 7 | 0.61 | 15.6 | None |
| | 14 | 0.63 | 17.4 | None |
| | 28 | 0.70 | 13.6 | None |
| | 42 | 0.95 | 13.5 | None |
| | 56 | 0.88 | 13.9 | None |
| Liquid food 2 | 1 | 0.89 | 34.4 | Very little |
| | 7 | 0.86 | 31.2 | Very little |
| | 14 | 1.28 | 38.0 | Very little |
| | 28 | 0.89 | 32.6 | Very little |
| | 42 | 0.92 | 29.5 | Very little |
| | 56 | 0.94 | 31.6 | Very little |

The liquid food prepared using Sample H, which was the protein material of Patent Document 3, had a low viscosity and a fine particle diameter, and showed good results, but the liquid food of the present invention showed even better results.

### Example 5: Study on Mayonnaise-Like Emulsion Composition

A mayonnaise-like emulsion composition was prepared by using the denatured protein material as an egg yolk substitute. Sample A was added to distilled water to prepare 5%, 10% and 15% aqueous solutions. As shown in Table 7, sunflower oil (Highall 75B, available from Fuji Oil Co., Ltd.) was added little by little to the prepared aqueous solution with stirring while adjusting the oil content to 60%, 65%, 70%, 75%, and 80%, respectively, to prepare Emulsions 1 to 15. 20 g of each of the emulsions was sampled and the appearance was evaluated. The results are shown in Table 8.

**[Table 7]**

| | Emulsion 1 | Emulsion 2 | Emulsion 3 | Emulsion 4 | Emulsion 5 | Emulsion 6 | Emulsion 7 | Emulsion 8 | Emulsion 9 | Emulsion 10 | Emulsion 11 | Emulsion 12 | Emulsion 13 | Emulsion 14 | Emulsion 15 |
|---|---|---|---|---|---|---|---|---|---|---|---|---|---|---|---|
| Sunflower oil | 60% | 65% | 70% | 75% | 80% | 60% | 65% | 70% | 75% | 80% | 60% | 65% | 70% | 75% | 80% |
| Sample aqueous solution | 40% | 35% | 30% | 25% | 20% | 40% | 35% | 30% | 25% | 20% | 40% | 35% | 30% | 25% | 20% |
| Aqueous solution concentration | 15% | | | | | 10% | | | | | 5% | | | | |
| Oil content | 60% | 65% | 70% | 75% | 80% | 60% | 65% | 70% | 75% | 80% | 60% | 65% | 70% | 75% | 80% |
| Water content | 34.0% | 29.8% | 25.5% | 21.2% | 17.0% | 36.0% | 31.5% | 27.0% | 22.5% | 18.0% | 38.0% | 33.3% | 28.5% | 23.7% | 19.0% |
| Protein | 6.0% | 5.2% | 4.5% | 3.8% | 3.0% | 4.0% | 3.5% | 3.0% | 2.5% | 2.0% | 2.0% | 1.7% | 1.5% | 1.3% | 1.0% |
| Oil content (dry basis) | 90.9% | 92.6% | 94.0% | 95.2% | 96.4% | 93.8% | 94.9% | 95.9% | 96.8% | 97.6% | 96.8% | 97.5% | 97.9% | 98.3% | 98.8% |
| Protein (dry basis) | 9.1% | 7.4% | 6.0% | 4.8% | 3.6% | 6.3% | 5.1% | 4.1% | 3.2% | 2.4% | 3.2% | 2.5% | 2.1% | 1.7% | 1.2% |

**[Table 8]**

| | Emulsified state | Comment |
|---|---|---|
| Emulsion 1 | Good emulsification | Creamy |
| Emulsion 2 | Good emulsification | Creamy |
| Emulsion 3 | Good emulsification | Creamy, increased viscosity |
| Emulsion 4 | Good emulsification | Mayonnaise property |
| Emulsion 5 | Good emulsification | Highly viscous mayonnaise property |
| Emulsion 6 | Good emulsification | Creamy |
| Emulsion 7 | Good emulsification | Creamy |
| Emulsion 8 | Good emulsification | Creamy, increased viscosity |
| Emulsion 9 | Good emulsification | Mayonnaise property |
| Emulsion 10 | Good emulsification | Highly viscous mayonnaise property |
| Emulsion 11 | Good emulsification | Creamy |
| Emulsion 12 | Good emulsification | Creamy |
| Emulsion 13 | Good emulsification | Creamy, increased viscosity |
| Emulsion 14 | Good emulsification | Creamy, increased viscosity |
| Emulsion 15 | Good emulsification | Creamy, increased viscosity |

As shown in Table 8, all Emulsions 1 to 15 were in a good emulsified state. In particular, the mayonnaise property was obtained in a state where the water content was low.

### Example 6: Study on Heat Resistance of Mayonnaise-Like Emulsion Composition

Samples A, F, and H were used to prepare egg yolk substitute emulsions 1 to 3 in accordance with the formulations shown in Table 9, and then the raw materials were mixed in accordance with the formulations shown in Table 10, and homogenized with a homomixer and a homogenizer to prepare mayonnaise-like emulsion compositions 1 to 3. The compositions of the mayonnaise-like emulsion compositions are shown in Table 11. 4.5 g of each sample was dispensed into a 5 mL plastic tube, and widths of the separated oil phase were measured after 5 hours at 50°C, 5 days at 60°C, 10 minutes at 100°C, and 10 minutes at 121°C, respectively. The results are shown in Table 12.

**[Table 9]**

| Units (parts) | | | |
|---|---|---|---|
| | Egg yolk substitute emulsion 1 | Egg yolk substitute emulsion 2 | Egg yolk substitute emulsion 3 |
| Sample A | 15 | | |
| Sample F | | 15 | |
| Sample H | | | 15 |
| Rapeseed oil | 29 | | |
| Phospholipid | 6 | | |
| Water | 50 | | |

**[Table 10]**

| Units (parts) | | | |
|---|---|---|---|
| | Mayonnaise-like emulsion composition 1 | Mayonnaise-like emulsion composition 2 | Mayonnaise-like emulsion composition 3 |
| Egg yolk substitute emulsion 1 | 15 | | |
| Egg yolk substitute emulsion 2 | | 15 | |
| Egg yolk substitute emulsion 3 | | | 15 |
| Rapeseed oil | 70 | | |
| Vinegar | 12.5 | | |
| Dietary salt | 2.0 | | |
| Sodium glutamate | 0.5 | | |

**[Table 11]**

| Composition | Mayonnaise-like emulsion composition |
|---|---|
| Protein | 2.3 % |
| Oil and fat | 75.3% |
| Carbohydrate | 1.0% |
| Water content | 19.0% |
| Protein (dry basis) | 2.9% |
| Oil and fat (dry basis) | 95.8% |
| Carbohydrate (dry basis) | 1.3% |

**[Table 12]**

| | | | | Unit (mm) |
|---|---|---|---|---|
| | 5 hours at 50°C | 5 days at 60°C | 10 minutes at 100°C | 10 minutes at 121°C |
| Mayonnaise-like emulsion composition 1 | 0 | 0 | 0 | 0 |
| Mayonnaise-like emulsion composition 2 | 2 | 7 | 15 | 14 |
| Mayonnaise-like emulsion composition 3 | 0 | 1 | 0 | 21 |

The mayonnaise-like emulsion composition 1 of the present invention using Sample A was found to be not separated under all conditions, and good results were obtained. The mayonnaise-like emulsion composition 2 using Sample F was found to be separated under all the conditions. The mayonnaise-like emulsion composition 3 using Sample H was found to be separated under the condition of 10 minutes at 121°C corresponding to retort sterilization.

### Industrial Applicability

When a denatured protein material having specific properties is selected and combined with an oil and fat, it is possible to provide a protein-containing oil-and-fat emulsion composition having high emulsion stability.

## Claims

1. A protein-containing oil-and-fat emulsion composition for producing an emulsified food, the protein-containing oil-and-fat emulsion composition comprising:
1 to 70 mass% of a protein;
30 to 99 mass% of an oil and fat; and
0 to 40 mass% of a carbohydrate,
based on the total amount of the protein, the oil and fat, and the carbohydrate being 100 mass%,
wherein
50 mass% or greater of the protein is derived from a denatured protein material satisfying both a) and b):
a) in a measurement result of molecular weight distribution, an area ratio of components having a molecular weight of 2000 Da or greater and less than 20000 Da to the total area is 45 to 90%; and
b) an aqueous solution containing the denatured protein material and having a crude protein concentration of 0.1 % does not become turbid when 250 mM guanidinium hydrochloride is added to the aqueous solution, but the aqueous solution becomes turbid when 2M ammonium sulphate is added to the aqueous solution.

2. The protein-containing oil-and-fat emulsion composition for producing an emulsified food according to claim 1, wherein the protein-containing oil-and-fat emulsion composition comprises:
1 to 20 mass% of the protein; and
80 to 99 mass% of the oil and fat,
based on the total amount of the protein, the oil and fat, and the carbohydrate being 100 mass%.

3. The protein-containing oil-and-fat emulsion composition for producing an emulsified food according to claim 1, wherein the denatured protein material further satisfies that an area ratio of components having a molecular weight of less than 2000 Da to the total area is 45% or less.

4. The protein-containing oil-and-fat emulsion composition for producing an emulsified food according to claim 1, wherein the denatured protein material further satisfies that an area ratio of components having a molecular weight of 10000 Da or greater to the total area is less than 50%.

5. The protein-containing oil-and-fat emulsion composition for producing an emulsified food according to claim 2, wherein the denatured protein material further satisfies that an area ratio of components having a molecular weight of less than 2000 Da to the total area is 45% or less and an area ratio of components having a molecular weight of 10000 Da or greater to the total area is less than 50%.

6. The protein-containing oil-and-fat emulsion composition for producing an emulsified food according to claim 1, wherein the protein-containing oil-and-fat emulsion composition is free of a milk protein.

7. The protein-containing oil-and-fat emulsion composition for producing an emulsified food according to claim 1, wherein the protein-containing oil-and-fat emulsion composition is free of an animal protein.

8. The protein-containing oil-and-fat emulsion composition for producing an emulsified food according to claim 5, wherein the protein-containing oil-and-fat emulsion composition is free of an animal protein.

9. The protein-containing oil-and-fat emulsion composition for producing an emulsified food according to claim 1, wherein an aqueous solution of the denatured protein material has an OD 660 nm of 0.5 or less, the aqueous solution being prepared to have a protein content of 10 mass% and pH 7.

10. The protein-containing oil-and-fat emulsion composition for producing an emulsified food according to claim 5, wherein an aqueous solution of the denatured protein material has an OD 660 nm of 0.5 or less, the aqueous solution being prepared to have a protein content of 10 mass% and pH 7.

11. The protein-containing oil-and-fat emulsion composition for producing an emulsified food according to claim 8, wherein an aqueous solution of the denatured protein material has an OD 660 nm of 0.5 or less, the aqueous solution being prepared to have a protein content of 10 mass% and pH 7.

12. An emulsified food comprising the protein-containing oil-and-fat emulsion composition for producing an emulsified food described in claim 1.

13. An emulsified food comprising the protein-containing oil-and-fat emulsion composition for producing an emulsified food described in claim 11.

14. The emulsified food according to claim 12, wherein the emulsified food contains the protein-containing oil-and-fat emulsion composition for producing an emulsified food in an amount of 0.1 to 99 mass% with respect to the emulsified food.

15. The emulsified food according to claim 13, wherein the emulsified food contains the protein-containing oil-and-fat emulsion composition for producing an emulsified food in an amount of 0.1 to 99 mass% with respect to the emulsified food.
